# EUROPÄISCHE PATENTSCHRIFT

(11) **EP 3 814 731 B1**
(45) Veröffentlichungstag und Bekanntmachung des Hinweises auf die Patenterteilung: **11.05.2022**
(21) Anmeldenummer: 19734763.6
(22) Anmeldetag: 27.06.2019
(51) Int. Cl.: G01J 3/02, G01J 3/10, G01J 3/28, G01J 3/42

(54) **OPTISCHE ANORDNUNG ZUR HYPERSPEKTRALEN BELEUCHTUNG UND AUSWERTUNG EINES OBJEKTES**
OPTICAL ASSEMBLY FOR THE HYPERSPECTRAL ILLUMINATION AND EVALUATION OF AN OBJECT
SYSTÈME OPTIQUE PERMETTANT L'ÉCLAIRAGE ET L'ANALYSE HYPERSPECTRALE D'UN OBJET

(30) Priorität: 29.06.2018 DE 102018210777
(43) Veröffentlichungstag der Anmeldung: 05.05.2021
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: EILENBERGER, Falk, 07745 Jena (DE); GRÄFE, Markus, 07745 Jena (DE); SETZPFANDT, Frank, 07745 Jena (DE); PERTSCH, Thomas, 07629 Hermsdorf (DE)
(74) Vertreter: Pfenning, Meinig & Partner mbB
(86) Internationale Anmeldenummer: PCT/EP2019/067221
(87) Internationale Veröffentlichungsnummer: WO 2020/002532

(56) Entgegenhaltungen:
- SHENGYING LIU ET AL: "Hyperspectral ghost imaging camera based on a flat-field grating", OPTICS EXPRESS, Bd. 26, Nr. 13, 25. Juni 2018 (2018-06-25) , Seiten 17705-40, XP055619414, DOI: 10.1364/OE.26.017705
- MILES PADGETT ET AL: "Ghost Imaging", OPTICS AND PHOTONICS NEWS, Bd. 27, Nr. 10, 1. Januar 2016 (2016-01-01), Seiten 38-45, XP055619378,

## Beschreibung

Die Erfindung betrifft eine Optische Anordnung zur hyperspektralen Beleuchtung und Auswertung eines Objektes. Sie kann angewendet werden, wenn hyperspektrale Informationen mit räumlicher Auflösung bestimmt werden sollen und diese mittels einer aktiven Beleuchtung gemessen werden können. Dies ist zum Beispiel bei der Analyse von Lebensmitteln, der chemischen Analyse, für medizinische Diagnostik und in der Überwachungstechnik erforderlich. So können beispielsweise Oberflächeneigenschaften oder auch chemische Zusammensetzungen von zu untersuchenden Objekten bestimmt werden.

So ist es bekannt, dreidimensionale Informationsverteilungen sequentiell in zweidimensionalen Teilverteilungen zu erfassen. Die Sequenzierung kann räumlich oder spektral erfolgen. Diese Methoden benötigen entweder Filter, welche einen räumlichen Bereich des Objekts oder eine Wellenlänge oder eine Kombination beider selektieren, oder Elemente, welche eine durchstimmbare Beleuchtung nur in einem räumlichen Bereich oder mit nur einer Wellenlänge erlauben oder Filter, welche bestimmte Raumbereiche mit bestimmten Wellenlängen korrelieren. Durch eine Filterung, insbesondere für hohe Auflösungen sinkt die Effizienz bei der Ausnutzung des eingesetzten Lichtes. Bei Einsatz einer Beleuchtung mit wechselnden Wellenlängen (Durchstimmung) sind die Komplexität und die Kosten nachteilig.

Es ist auch bekannt, durch geeignete optische Elemente eine dreidimensionale Informationsverteilung in spezifischer Art und Weise auf einen zweidimensionalen Detektor zu projizieren. Aus dem gemessenen Einzelbild oder einer Serie von Einzelbildern von einem oder einer Anordnung mehrerer bildgebender Geräte bei denen ein experimenteller Parameter variiert wird, kann dann die gesamte Information numerisch rekonstruiert werden. Nachteilig ist es dabei, dass ein hoher Rechenaufwand zur Rekonstruktion erforderlich ist.

Auch das so genannte Computational Ghost Imaging kann für diese Zwecke eingesetzt werden. Dabei wird ein einzelner Lichtstrahl einer breitbandigen Lichtquelle, in den für verschiedene spektrale Bänder unterschiedliche Fluktuationen induziert werden bevor das Licht mit der Probe interagiert, genutzt. Durch Analyse der Fluktuationen nach der Durchstrahlung einer Probe werden in einer Reihe zeitlich sequentiell aufgenommener Messungen, mittels eines einzelnen Detektorsystems, hyperspektrale Bilder erzeugt. Nachteil dieses Verfahrens ist die komplexe Kalibrierung des Aufbaus bzw. die notwendige genaue Steuerung oder Bestimmung der eingebrachten Fluktuationen während der Beleuchtung der jeweiligen Probe.

So sind von Shengying Liu u.a. in "Hyperspectral ghost imaging camera based on a flat-field grating"; Optics Express, Bd. 26, Nr. 13, 25. Juni 2018, S. 17705-40, XP055619414 Möglichkeiten zur Gewinnung dreidimensionaler Daten mit einem zweidimensionalen Detektor beschrieben.

Miles Padget u.a. beschreiben in "Ghost Imaging"; Optics and Photonics News; Bd. 27, Nr. 10, 1. Januar 2016, S. 38-45, XP0556119378 Möglichkeiten zur Abbildung von Objekten mit räumlich getrennten Photonen.

Es ist daher Aufgabe der Erfindung eine Bestimmung zweidimensional räumlich aufgelöster spektraler Charakteristiken des durch ein Objekt transmittierten oder von einem Objekt reflektierten oder von einem Objekt gestreuten Lichts zu ermöglichen und dabei eine intrinsisch dreidimensionale Informationsverteilung, nämlich die vom Objekt transmittierte, reflektierte oder gestreute Lichtintensität in Abhängigkeit von zwei Ortskoordinaten und der Wellenlänge, mit Hilfe eines oder mehrerer Detektoren erfasst werden, welche nur maximal zweidimensionale Informationsverteilungen erfassen können, zu erhalten.

Erfindungsgemäß wird diese Aufgabe mit einer optischen Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

An der Anordnung ist eine Lichtquelle umfassend ein optisches Element, das von der Lichtquelle angestrahlt ist, vorhanden. Das optische Element ist dabei ausgebildet Paare von eindeutig zuordenbaren Photonen in einen ersten Lichtstrahl und einen zweiten Lichtstrahl so aufzuteilen, dass der erste Lichtstrahl auf ein erstes Detektorsystem auftrifft und der zweite Lichtstrahl auf ein Objekt auftrifft. Dabei wird vom Objekt reflektierte, gestreute oder durch das Objekt transmittierte Lichtstrahlung auf ein diese Lichtstrahlung spektral zerlegendes optisches Element und vom diese Lichtstrahlung spektral zerlegenden optischen Element auf ein zweites Detektorsystem gerichtet.

Alternativ dazu kann aber auch der erste Lichtstrahl auf ein diese Lichtstrahlung spektral zerlegendes optisches Element und vom diese Lichtstrahlung spektral zerlegenden optischen Element auf ein erstes Detektorsystem und die vom Objekt reflektierte, gestreute oder durch das Objekt transmittierte Lichtstrahlung direkt auf das zweite Detektorsystem gerichtet sein.

Je nachdem auf welches Detektorsystem spektral zerlegte Lichtstrahlung auftrifft, soll dieses eine spektral aufgelöste Erfassung der spektral zerlegten Lichtstrahlung des jeweiligen Lichtstrahls ermöglichen.

Der erste und der zweite Lichtstrahl sollen spektral, räumlich und zeitlich korreliert sein.

Eine Lichtquelle mit der Paare von eindeutig zuordenbaren Photonen in einen ersten Lichtstrahl und einen zweiten Lichtstrahl aufgeteilt werden können, kann beispielweise mittels spontaner parametrischen Herunterkonversion von Licht in speziellen optischen Medien umgesetzt werden.

Das erste Detektorsystem ist ausgebildet, eine ortsaufgelöste Erfassung des ersten Lichtstrahls und das zweite Detektorsystem ist ausgebildet eine spektralaufgelöste Erfassung des spektral zerlegten sowie am Objekt gestreuten, reflektierten oder durch das Objekt transmittierten zweiten Lichtstrahls durchzuführen.

Es kann aber auch das erste Detektorsystem für eine spektral aufgelöste Erfassung und das zweite Detektorsystem für eine ortsaufgelöste Erfassung ausgebildet sein.

Das erste und das zweite Detektorsystem sind mit einer elektronischen Auswerteeinheit verbunden, die ausgebildet ist eine Zuordnung der orts- und spektralaufgelöst erfassten Photonen eines Paaren, sowie derer gemessenen Eigenschaften vorzunehmen.

Der erste und der zweite Lichtstrahl sind dabei jeweils spektral, räumlich und zeitlich korreliert.

Es sollte also eine Lichtquelle, die zwei spektral breitbandige und räumlich ausgedehnte Lichtstrahlen ausbilden kann, die mit Intensitätsfluktuationen behaftet sind, eingesetzt werden. Die Fluktuationen bzw. Veränderungen müssen in den unterschiedlichen Spektralanteilen jeweils eines der beiden Lichtstrahlen nicht notwendigerweise miteinander korreliert sein. Es sollte aber zu jedem schmalen Spektralband des ersten Lichtstrahls genau ein schmalbandiges Spektralband in dem zweiten Lichtstrahl existieren, dass die gleichen Fluktuationen aufweist. Weiterhin sollten die Fluktuationen zwischen zwei Positionen oder Abstrahlwinkeln in jeweils einem der beiden ausgedehnten Lichtstrahlen unkorreliert sein. Zu jeder Position der jedem Abstrahlwinkel innerhalb des ersten Lichtstrahls sollte es genau eine Position oder einen Abstrahlwinkel in dem zweiten Lichtstrahl geben, an dem die Intensität die gleichen Fluktuationen/Veränderungen aufweist.

Dies kann man insbesondere mit einem optischen Element erreicht werden, das Photonen durch spontane nichtlineare Prozesse in verschränkte oder korrelierte Photonenpaare umwandeln kann. Dies kann beispielsweise ein nichtlinearer Kristall sein, durch den ein von einer Lichtquelle emittierter Lichtstrahl gerichtet wird.

Mit einem spontanen Konversionsprozess können dabei die notwendigen Intensitätsfluktuationen erreicht werden. Die grundlegenden Eigenschaften des Konversionsprozesses können die räumlichen und spektralen Korrelationen zwischen den beiden Photonen eines Paares sicherstellen. Durch Trennung der beiden Photonen eines Paares können der erste und der zweite Lichtstrahl mit unterschiedlicher Strahlausrichtung und/oder -position erhalten werden. Die Trennung der Photonenpaare für den ersten und den zweiten Lichtstrahl kann entweder durch eine geeignete Geometrie des nichtlinearen Kristalls erfolgen, welche die Emission beider Photonen beispielsweise in unterschiedliche Richtungen sicherstellen kann. Sie kann aber auch durch Nutzung eines Strahlteilers erfolgen, der die Photonen in Abhängigkeit von ihrer Polarisation oder Wellenlänge oder einfach statistisch auf den ersten und den zweiten Lichtstrahl aufteilt.

Der erste Lichtstrahl mit den beschriebenen Eigenschaften wird ein bevorzugt zweidimensional räumlich hinreichend auflösendes erstes Detektorsystem gerichtet. Dabei sollten insbesondere die Fluktuationen der Intensität des ersten Lichtstrahls an den verschiedenen räumlich unterschiedlichen Positionen oder in den verschiedenen Richtungen erfasst werden. Dieses erste Detektorsystem kann die zweidimensionale räumliche Intensitätsfluktuationsverteilung mit hinreichender Genauigkeit und Auflösung erfassen. Es kann dabei beispielsweise eine zweidimensionale Anordnung von Einzelphotonendetektoren sein, es kann aber auch ein hinreichend empfindlicher und schneller CCD-Sensor oder auch CMOS-Sensor oder ein vergleichbares Gerät verwendet werden. Es kann auch ein einzelner Detektor verwendet werden, der den abzubildenden Bereich in geeigneter Art und Weise abrastert.

Zwischen der Lichtquelle oder einem optischen Element, mit dem eine Trennung der Photonen aus den Photonenpaaren erreichbar ist, und dem ersten Detektorsystem kann mindestens ein abbildendes oder strahlformendes optisches Element, insbesondere mindestens eine optische Linse oder ein reflektierendes optisches Element im Strahlengang des ersten Lichtstrahls angeordnet sein.

Der zweite Lichtstrahl wird auf das jeweilige Objekt gerichtet. Dabei kann zwischen dem Objekt und der Lichtquelle oder dem optischen Element, mit dem eine Trennung der Photonen von Photonenpaaren erreichbar ist im Strahlengang des zweiten Lichtstrahls ebenfalls mindestens ein abbildendes oder strahlformendes optisches Element, insbesondere mindestens eine optische Linse oder ein reflektierendes optisches Element angeordnet sein. Das vom Objekt reflektierte, transmittierte oder gestreute Licht des zweiten Lichtstrahls wird auf ein optisches Element gerichtet, mit dem die vom Objekt gestreute, reflektierte oder durch das Objekt transmittierte Lichtstrahlung in seine spektralen Komponenten zerlegt wird. Dabei können unterschiedliche Propagationsrichtungen für die unterschiedlichen spektralen Komponenten (Wellenlängen bzw. schmale Wellenlängenbereiche, bei denen z.B. Wellenlängen von ± 10 nm um eine zentrale Wellenlänge eingehalten sind) erhalten werden. Diese räumliche spektrale Zerlegung dieser Lichtstrahlung kann mit einem Prisma, einem optischen Gitter oder einem Element ähnlicher Funktion oder einer Anordnung derartiger Elemente oder einer Kombination mit abbildenden Elementen oder Anordnungen erreicht werden.

Unter optionaler Verwendung eines geeigneten optischen Systems, z.B. einer zylindrischen Linse oder eines Mikrolinsenarrays kann die spektral zerlegte Lichtstrahlung dann auf ein zweites räumlich hinreichend auflösendes Detektorsystem gerichtet werden, wobei die Wellenlängen der spektral zerlegten Lichtstrahlen mit einzelnen Detektoren ortsaufgelöst erfasst werden können. Dabei können die verschiedenen Spektralanteile der Lichtstrahlung, die von einer Position des Objekts transmittiert, gestreut oder reflektiert wurde, an unterschiedlichen Raumpunkten des zweiten Detektorsystems gemessen werden. Spektralanteile gleicher Wellenlänge, die von unterschiedlichen Objektpositionen reflektiert, gestreut oder transmittiert wurden, können dabei am selben Raumpunkt, insbesondere dem selben Detektor des zweiten Detektorsystems vermessen werden. An den einzelnen Raumpunkten des zweiten Detektorsystems sollte es möglich sein, die zeitlichen Intensitätsfluktuationen der einzelnen Spektralanteile der vom jeweiligen Objekt reflektierten, gestreuten oder durch das Objekt transmittierten Lichtstrahlung zu vermessen. Für das zweite Detektionssystem kann wiederum eine Anordnung von Einzelphotonendetektoren oder ein CCD-Sensor oder CMOS- Sensor verwendet werden.

Wenn zur spektralen Aufspaltung des zweiten Lichtstrahls ein optisches Element verwendet wird, das die Aufspaltung nur in einer Raumdimension realisiert, kann bei Verwendung eines optischen Elements, das in die dazu orthogonale Raumrichtung fokussiert, eine eindimensionale Anordnung von Detektoren, beispielsweise eine Reihenanordnung verwendet werden. Das optische Element mit dem eine spektrale Aufspaltung der reflektierten, gestreuten oder transmittierten Lichtstrahlung und das zweite Detektorsystem können auch als ein Gesamtsystem betrachtet und realisiert werden, das eine räumlich aufgelöste Spektralinformation bereitstellt.

Die beiden Detektorsysteme sollten bevorzugt jedoch als eine Reihen- und Spaltenanordnung einzelner Detektoren für eine zweidimensionale Erfassung der Messsignale ausgebildet sein.

Zur Durchführung einer Messung werden die von beiden Detektorsystemen gemessenen zeitlichen Verläufe von Intensitätsfluktuationen mit einer elektronischen oder anders gearteten Auswerteeinheit miteinander verglichen bzw. korreliert. Dazu können die elektrischen Ausgangssignale der Detektoren des ersten und des zweiten Detektorsystems in geeigneter Art und Weise verarbeitet werden, sodass Korrelationen der orts- und der spektralaufgelöst erfassten Messsignale ausgewertet werden können. Dies kann durch Nutzung z.B. eines Computers geschehen, der die Messsignale einzeln aufzeichnet und danach per Software korreliert. Alternativ können auch geeignete hardwarenahe Lösungen, wie zum Beispiel FPGA-Schaltkreise verwendet werden. Dadurch können die mit dem ersten Detektorsystem ortsaufgelöst erfassten Messsignalanteile verschiedener Raumpunkte den spektral aufgelösten Messsignalanteilen des zweiten Detektorsystems zugeordnet werden, um die vom Objekt transmittierten, reflektierten oder gestreuten Intensitäten unterschiedlicher Spektralkomponenten für diese Raumpunkte zu erhalten. Wird diese Zuordnung für alle Raumpunkte des räumlich auflösenden ersten Detektorsystems durchgeführt, kann ein hyperspektrales Bild erhalten und ausgewertet werden.

Die Zuordnung der einzelnen Spektralkanäle zu bestimmten Wellenlängenbereichen kann durch Kalibrierungsmessungen erfolgen, die für jede zu vermessende räumliche Position vor der Vermessung des jeweiligen Objekts durchzuführen sind.

Mit der Erfindung können gegenüber dem Stand der Technik für hyperspektrale Bildgebung und Auswertung einige Vorteile erreicht werden. Dabei kann das gesamte zur Verfügung stehende Licht genutzt werden, da keine räumliche oder spektrale Filterung notwendig ist. Weiterhin sind keinerlei bewegliche Teile notwendig. Durch diese Eigenschaften entstehen Leistungsvorteile, da eine bessere Auflösung bei gleicher zur Verfügung stehender Lichtmenge erreicht werden kann. Es kann also eine geringere Intensität des zur Beleuchtung eines Objektes erforderlichen Lichts gewählt werden, was insbesondere bei lichtempfindlichen Objekten, wie beispielsweise biologischen Proben vorteilhaft ist.

Außerdem kann eine feste Konstruktion mechanisch stabiler realisiert werden und bietet deshalb eine erhöhte Messgenauigkeit über einen längeren Zeitraum. Es kann auch eine Verbesserung der Rauscheigenschaften bei der Messung erreicht werden.

Nachfolgend soll die Erfindung beispielhaft näher erläutert werden.

Dabei zeigt:

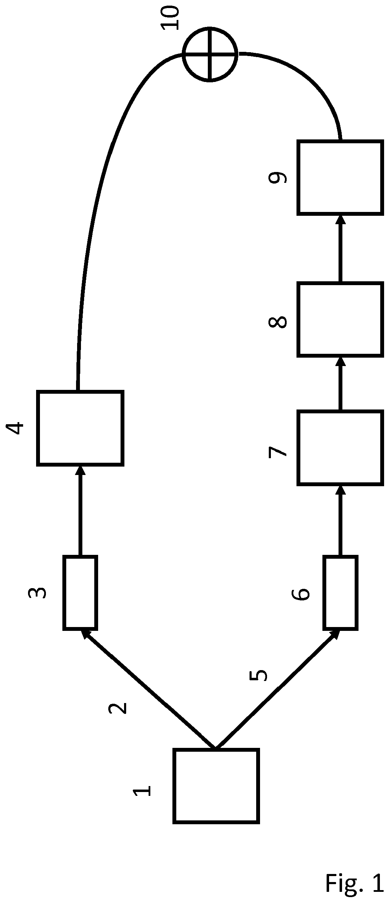

Figur 1 in schematischer Form ein Beispiel einer möglichen Implementierung einer erfindungsgemäßen optischen Anordnung.

Bei dem in Figur 1 gezeigten Beispiel wird Lichtstrahlung einer hier nicht dargestellten Lichtquelle durch ein optisches Element 1 gerichtet und in einen ersten Lichtstrahl 2 und einen zweiten Lichtstrahl 5 mit jeweils unterschiedlieher Richtung aufgeteilt. Das optische Element 1 ist bei diesem Beispiel ein nichtlinearer Kristall, der aus einem optisch nichtlinearen Material, wie beispielweise Beta-Barium-Borat, besteht.

Mit dem optischen Element 1 werden zusätzlich Photonen von Photonenpaaren für den ersten Lichtstrahl 2 und den zweiten Lichtstrahl 5 voneinander getrennt. Dabei besteht bei den Photonen eines Paares eine eindeutige Zuordnung zueinander.

Der erste Lichtstrahl 2 und der zweite Lichtstrahl 5 sind dabei in ihren räumlichen, spektralen und zeitlichen Eigenschaften korreliert.

Der erste Lichtstrahl 2 trifft auf mindestens ein optisches Element 3 auf, mit dem der erste Lichtstrahl 2 so beeinflusst wird, dass er zumindest annähernd auf die gesamte sensitive Oberfläche des ersten Detektorsystems 4 auftrifft. Das erste Detektorsystem 4 ist mit einer Reihen- und Spaltenanordnung einzelner Detektoren gebildet und zur ortsaufgelösten Erfassung des ersten Lichtstrahls 2 ausgebildet. Dabei kann mit jedem einzelnen Detektor die Intensität der Lichtstrahlung des ersten Lichtstrahls 2 ortsaufgelöst erfasst werden.

Der zweite Lichtstrahl 5 trifft auf mindestens ein optisches Element 6 auf, mit dem der zweite Lichtstrahl 5 so beeinflusst wird, dass er zumindest annähernd auf die gesamte oder die zu untersuchende Oberfläche des jeweiligen Objektes 7 auftrifft.

Die Lichtstrahlung, die vom Objekt 7 reflektiert, gestreut oder durch das Objekt 7 transmittiert wird, trifft auf ein entsprechend angeordnetes optisches Element 8 auf, mit dem eine spektrale Zerlegung dieser Lichtstrahlung in einzelne Wellenlängen oder schmale Wellenlängenbereiche erreicht wird und die die Lichtstrahlung einzelner Wellenlängen oder schmalen Wellenlängenbereichen lokal definiert auf Detektoren des zweiten Detektorsystems 9 auftreffen, so dass eine spektralaufgelöste Erfassung der vom Objekt 7 reflektierten gestreuten oder transmittierten Lichtstrahlung erreichbar ist.

Das erste Detektorsystem 4 und das zweite Detektorsystem 9 sind an die elektronische Auswerteeinheit 10 angeschlossen. Mit der elektronischen Auswerteeinheit kann eine Auswertung durchgeführt werden, wie sie im allgemeinen Teil der Beschreibung erläutert worden ist.

## Patentansprüche

1. Optische Anordnung zur Beleuchtung und hyperspektralen Auswertung eines Objektes mit einer Lichtquelle , wobei die optische Anordnung eine Lichtquelle und ein optisches Element (1), das von der Lichtquelle angestrahlt wird umfasst, wobei die optische Anordnung weiterhin ein spektral zerlegendes optisches Element (8), ein erstes Detektorsystem (4), ein zweites Detektorsyystem (9), und eine Auswerteeinheit (10) umfasst, wobei
das optische Element (1) ausgebildet ist, um Paare von eindeutig zuordenbaren Photonen in einen ersten Lichtstrahl (2) und einen zweiten Lichtstrahl (5) so aufzuteilen, dass
der erste Lichtstrahl (2) auf das erste Detektorsystem (4) auftrifft und
der zweite Lichtstrahl (5) auf ein Objekt (7) und vom Objekt (7) reflektierte, gestreute oder durch das Objekt (7) transmittierte Lichtstrahlung auf das diese Lichtstrahlung spektral zerlegende optische Element (8) und vom diese Lichtstrahlung spektral zerlegenden optischen Element (8) auf das zweite Detektorsystem (9) gerichtet ist, oder
der erste Lichtstrahl (2) auf das diese Lichtstrahlung spektral zerlegende optische Element (8) und vom diese Lichtstrahlung spektral zerlegenden optischen Element (8) auf das erste Detektorsystem (4) und die vom Objekt (7) reflektierte, gestreute oder durch das Objekt (7) transmittierte Lichtstrahlung direkt auf das zweite Detektorsystem gerichtet ist und
das erste Detektorsystem (4) ausgebildet ist, um eine ortsaufgelöste Erfassung des ersten Lichtstrahls (2) und
das erste Detektorsystem (4) oder das zweite Detektorsystem (9) ausgebildet ist, um eine spektral aufgelöste Erfassung des spektral zerlegten sowie am Objekt (7) gestreuten, reflektierten oder durch das Objekt (7) transmittierten zweiten Lichtstrahls (5) durchzuführen und das erste und das zweite Detektorsystem (4, 9) mit der elektronischen Auswerteeinheit (10) verbunden sind, die ausgebildet ist, eine Zuordnung der orts- und spektralaufgelöst erfassten Messsignale vorzunehmen und
der erste und der zweite Lichtstrahl (2, 5) spektral, räumlich und zeitlich korreliert sind.

2. Anordnung nach Anspruch 1, **dadurch gekennzeichnet, dass** das optische Element (1) ein nichtlinearer optischer Kristall ist, mit dem Photonen in verschränkte oder miteinander korrelierte Photonenpaare umwandelbar sind, wobei die Aufteilung der Photonen in den ersten und den zweiten Lichtstrahl (2, 5) direkt durch den nichtlinearen optischen Kristall oder zusätzlich mittels eines Strahlteilers, der im Strahlengang des vom nichtlinearen optischen Kristall emittierten Lichtstrahls angeordnet ist, erfolgt.

3. Anordnung nach Anspruch 1 oder 2, **dadurch gekennzeichnet, dass** das optische Element (1) oder der Strahlteiler so ausgebildet ist, dass Aufteilung in den ersten und den zweiten Lichtstrahl (2, 5) in Abhängigkeit der jeweiligen Polarisation und/oder Wellenlänge erfolgt.

4. Anordnung nach einem der vorhergehenden Ansprüche, **dadurch gekennzeichnet, dass** ein die Lichtstrahlung spektral zerlegendes optisches Element (8) ein optisches Gitter und/oder optisches Prisma ist.

5. Anordnung nach einem der vorhergehenden Ansprüche, **dadurch gekennzeichnet, dass** das optische Element (8) integraler Bestandteil des zweiten Detektorsystems (9) ist.

6. Anordnung nach einem der vorhergehenden Ansprüche, **dadurch gekennzeichnet, dass** mindestens ein abbildendes oder strahlformendes optisches Element im Strahlengang des ersten Lichtstrahls (2) und/oder des zweiten Lichtstrahls (5) angeordnet ist.

7. Anordnung nach dem vorhergehenden Anspruch, **dadurch gekennzeichnet, dass** das mindestens ein abbildendes oder strahlformendes optisches Element eine optische Linse oder ein den ersten und/oder zweiten Lichtstrahl (2, 5) reflektierendes Element ist.

8. Anordnung nach einem der vorhergehenden Ansprüche, **dadurch gekennzeichnet, dass** das erste Detektorsystem (4) für eine zweidimensional räumlich aufgelöste Erfassung der Photonen im ersten Lichtstrahl (2) ausgebildet ist.

9. Anordnung nach einem der vorhergehenden Ansprüche, **dadurch gekennzeichnet, dass** spektral zerlegte Lichtstrahlung, die vom Objekt (7) reflektiert, gestreut oder durch das Objekt (7) transmittiert worden ist, mit einer optischen Linse oder einem System mehrerer Linsen oder einem Mikrolinsenarray oder einem die Lichtstrahlung reflektierenden optischen Element auf das zweite Detektorsystem (9) gerichtet ist.

## Claims

1. An optical arrangement for illuminating and hyperspectrally evaluating an object with a light source, wherein the optical arrangement comprises a light source and an optical element (1) that is irradiated by the light source, wherein the optical arrangement further comprises an optical element (8) that spectrally decomposes, a first detector system (4), a second detector system (9), and an evaluation unit (10), wherein
the optical element (1) is embodied to split pairs of uniquely assignable photons into a first light beam (2) and a second light beam (5) in such a way that
the first light beam (2) is incident on the first detector system (4) and
the second light beam (5) is directed onto an object (7) and light radiation that is reflected or scattered by the object (7) or transmitted through the object (7) is directed onto the optical element (8) that spectrally decomposes said light radiation and, from the optical element (8) that spectrally decomposes said light radiation, onto the second detector system (9),
or
the first light beam (2) is directed onto the optical element (8) that spectrally decomposes said light radiation and, from the optical element (8) that spectrally decomposes said light radiation, onto the first detector system (4), and the light radiation that is reflected or scattered by the object (7) or transmitted through the object (7) is directed directly onto the second detector system,
and
the first detector system (4) is embodied to provide spatially resolved detection of the first light beam (2), and
the first detector system (4) or the second detector system (9) is embodied to perform spectrally resolved detection of the second light beam (5) that is spectrally decomposed and scattered or reflected by the object (7) or transmitted through the object (7), and
the first and the second detector system (4, 9) are connected to an electronic evaluation unit (10) that is embodied to carry out an assignment of the measurement signals detected in a spatially and spectrally resolved manner, and
the first and the second light beam (2, 5) are spectrally, spatially, and temporally correlated.

2. The arrangement as claimed in claim 1, **characterized in that** the optical element (1) is a non-linear optical crystal with which photons can be converted into entangled or mutually correlated photon pairs, wherein the
splitting of the photons into the first and second light beams (2, 5) is effected directly by the non-linear optical crystal
or additionally by means of a beam splitter arranged in the beam path of the light beam emitted by the non-linear optical crystal.

3. The arrangement as claimed in claim 1 or 2, **characterized in that** the optical element (1) or the beam splitter is embodied such that splitting into the first and second light beams (2, 5) is effected depending on the respective polarization and/or wavelength.

4. The arrangement as claimed in one of the preceding claims, **characterized in that** an optical element (8) that spectrally decomposes the light radiation is an optical grating and/or optical prism.

5. The arrangement as claimed in one of the preceding claims, **characterized in that** the optical element (8) is an integral part of the second detector system (9).

6. The arrangement as claimed in one of the preceding claims, **characterized in that** at least one imaging or beam-shaping optical element is arranged in the beam path of the first light beam (2) and/or the second light beam (5).

7. The arrangement as claimed in the preceding claim, **characterized in that** the at least one imaging or beam-shaping optical element is an optical lens or an element reflecting the first and/or second light beam (2, 5).

8. The arrangement as claimed in one of the preceding claims, **characterized in that** the first detector system (4) is embodied for two-dimensionally spatially resolved detection of the photons in the first light beam (2).

9. The arrangement as claimed in one of the preceding claims, **characterized in that** spectrally decomposed light radiation that has been reflected or scattered by the object (7) or transmitted through the object (7) is directed onto the second detector system (9) with an optical lens or a system of a plurality of lenses or a microlens array or an optical element reflecting the light radiation.

## Revendications

1. Ensemble optique pour l'éclairage et l'évaluation hyperspectrale d'un objet avec une source de lumière, dans lequel l'agencement optique comprend une source de lumière et un élément optique (1), qui est éclairé par la source de lumière, dans lequel l'ensemble optique comprend en outre un élément optique (8) de décomposition spectrale, un premier système de détection (4), un deuxième système de détection (9), et une unité d'évaluation (10), dans lequel
l'élément optique (1) est réalisé pour diviser des paires de photons pouvant être attribués de manière univoque en un premier faisceau lumineux (2) et un deuxième faisceau lumineux (5), de sorte que
le premier faisceau lumineux (2) est incident sur le premier système de détection (4) et
le deuxième faisceau lumineux (5) est dirigé sur un objet (7) et un rayonnement lumineux réfléchi, diffusé par l'objet (7) ou transmis par l'objet (7) est dirigé sur l'élément optique (8) décomposant spectralement ce rayonnement lumineux et à partir de l'élément optique (8) décomposant spectralement ce rayonnement lumineux sur le deuxième système de détection (9), ou
le premier faisceau lumineux (2) est dirigé sur l'élément optique (8) décomposant spectralement ce rayonnement lumineux et à partir de l'élément optique (8) décomposant spectralement ce rayonnement lumineux sur le premier système de détection (4) et le rayonnement lumineux réfléchi, diffusé par l'objet (7) ou transmis par l'objet (7) directement sur le deuxième système de détection et
le premier système de détection (4) est réalisé pour une détection à résolution spatiale du premier faisceau lumineux (2) et
le premier système de détection (4) ou le deuxième système de détection (9) est réalisé pour effectuer une détection à résolution spectrale du deuxième faisceau lumineux (5) décomposé spectralement ainsi que diffusé, réfléchi sur l'objet (7), ou transmis par l'objet (7) et
le premier et le deuxième système de détection (4, 9) sont reliés à l'unité d'évaluation électronique (10), qui est réalisée pour procéder à une affectation des signaux de mesure détectés à résolution locale et spectrale et
le premier et le deuxième faisceau lumineux (2, 5) sont corrélés spectralement, spatialement et temporellement.

2. Ensemble selon la revendication 1, **caractérisé en ce que** l'élément optique (1) est un cristal optique non linéaire, avec lequel des photons peuvent être convertis en paires de photons intriqués ou corrélés entre eux, dans lequel
la division des photons en le premier et le deuxième faisceau lumineux (2, 5) est effectuée directement par le cristal optique non linéaire
ou en plus au moyen d'un diviseur de faisceau, qui est disposé dans le trajet du faisceau lumineux émis par le cristal optique non linéaire.

3. Ensemble selon la revendication 1 ou 2, **caractérisé en ce que** l'élément optique (1) ou le diviseur de faisceau est réalisé de sorte que la division en le premier et le deuxième faisceau lumineux (2, 5) s'effectue en fonction de la polarisation et/ou longueur d'onde respective.

4. Ensemble selon l'une quelconque des revendications précédentes, **caractérisé en ce qu'**un élément optique (8) décomposant spectralement le rayonnement lumineux est un réseau optique et/ou prisme optique.

5. Ensemble selon l'une quelconque des revendications précédentes, **caractérisé en ce que** l'élément optique (8) fait partie intégrante du deuxième système de détection (9).

6. Ensemble selon l'une quelconque des revendications précédentes, **caractérisé en ce qu'**au moins un élément optique de formation d'image ou de faisceau est disposé dans le trajet du premier faisceau lumineux (2) et/ou du deuxième faisceau lumineux (5).

7. Ensemble selon la revendication précédente, **caractérisé en ce que** le au moins un élément optique de formation d'image ou de faisceau est une lentille optique ou un élément réfléchissant le premier et/ou deuxième faisceau lumineux (2, 5).

8. Ensemble selon l'une quelconque des revendications précédentes, **caractérisé en ce que** le premier système de détection (4) est réalisé pour une détection à résolution spatiale bidimensionnelle des photons dans le premier faisceau lumineux (2).

9. Ensemble selon l'une quelconque des revendications précédentes, **caractérisé en ce que** le rayonnement lumineux spectralement décomposé, qui a été réfléchi, diffusé par l'objet (7), ou transmis par l'objet (7), est dirigé sur le deuxième système de détection (9) avec une lentille optique ou un système de plusieurs lentilles ou un réseau de microlentilles ou un élément optique réfléchissant le rayonnement lumineux.
